Europäisches Patentamt

European Patent Office

Office européen des brevets

(19)

(11) EP 0 792 786 A2

(12) **EUROPEAN PATENT APPLICATION**

(43) Date of publication:
03.09.1997 Bulletin 1997/36

(51) Int Cl.⁶: **B62D 5/04**

(21) Application number: 97301231.3

(22) Date of filing: 25.02.1997

(84) Designated Contracting States:
DE FR GB IT

(30) Priority: 01.03.1996 GB 9604434

(71) Applicant: LUCAS INDUSTRIES public limited
company
Solihull, B90 4LA (GB)

(72) Inventors:
• Wilson-Jones, Russell
Shottery, Stratford-upon-Avon, CV37 9EU (GB)

• Horton, Steven John
Shirley, Solihull, B90 2BQ (GB)
• Penketh, David Michael
Tamworth, Straffordshire, B77 1NR (GB)
• McQueen, Alastair Malcolm
Hockley Heath, Solihull, B94 6QQ (GB)

(74) Representative: Robinson, John Stuart et al
MARKS & CLERK,
Alpha Tower,
Suffolk Street Queensway
Birmingham, B1 1TT (GB)

(54) **Clutch current controller and epas system**

(57) An electric power assisted steering system comprises an electric motor, an electromagnetic clutch (4), and a clutch current controller (3, 6). The controller (3, 6) controls the clutch current as a function of motor output, for instance so that the maximum torque which the clutch (4) can transmit without slipping exceeds the assistance torque applied to the clutch (4) by a predetermined amount or proportion.

FIG 1

## Description

The present invention relates to a clutch current controller for an electric power assisted steering (EPAS) system and to an EPAS system.

US 4, 778, 021 relates to an EPAS system for a vehicle. The system comprises an electric motor having a motor shaft, and an electromagnetic hysteresis clutch. The current supplied to the electromagnetic hysteresis clutch is varied to reduce the generation of shocks and noises caused when the system is changed from a power assisted steering mode at low vehicle speeds to a manual steering mode at high vehicle speeds.

GB-B-2 161 770 discloses an EPAS system having a magnetic clutch to disconnect an electric motor at high speeds in order to obtain a steering effect similar to that experienced without the presence of an EPAS system.

GB-B-2 242 289 and EP-B1-0 411 600 also disclose power steering systems.

It is known to provide a clutch in an EPAS system so as to protect against an unwanted torque in the motor shaft. Such a torque may arise from a mechanical failure in the motor causing it to jam or a failure in the motor current control. An incorrect motor current may arise from faults or failures in the motor windings, in the wiring between the motor and a control unit, in any sensors used to detect motor position and motor current, in power electronics used to drive the motor, in electronics used to drive the power electronics, or, in the case of a microprocessor controller, in the control algorithms which determine the signals to be used to drive the power electronics. In the event of an incorrect motor current, the control unit disengages the clutch so as to isolate the motor from the vehicle steering system. Thus, undesirable and potentially dangerous torques cannot be applied to the steering system and the vehicle driver can continue to steer the vehicle manually with no assistance.

The clutch also serves to protect the motor and gearbox assembly of the EPAS system from unwanted torque applied through the road wheels. This may occur, for instance during minor accidents, for example striking an obstruction, such as a curb.

According to a first aspect of the present invention, there is provided a clutch current controller for an electric power assisted steering system having an electric motor and an electromagnetic clutch, characterised in that the controller is arranged to supply a current to the clutch as a function of the output of the electric motor.

The controller may be arranged to control the clutch current such that the maximum torque which the clutch is capable of transmitting without slipping is greater, by a predetermined amount or proportion, than the assistance torque applied to the clutch input. Where the clutch is provided at the motor shaft, the assistance torque is equal to the motor torque. Where the clutch is provided at the output of a reduction gearbox whose input is connected to the motor, the assistance torque is substantially proportional to the motor torque. The motor torque is generally substantially proportional to the motor current so that the assistance torque is generally substantially proportional to the motor current and can therefore be readily derived therefrom without the need for any special sensing arrangements.

The controller may be arranged to control the clutch current as a function of vehicle speed. The controller may be arranged to reduce the clutch current as the vehicle speed rises.

Preferably, the electronic clutch current controller is arranged to provide closed-loop control of the clutch current.

Preferably, the clutch current controller is arranged to discontinue the supply of clutch current in response to a fault signal.

Preferably, at least one power device is provided for connection in series with a clutch winding of the clutch. The or each power device may be an electromagnetic relay or a solid state device, for example, a transistor.

A safety controller may be arranged to control one of the at least one power devices.

Preferably, the clutch current controller is arranged to control the clutch current by pulse width modulation.

According to a second aspect of the invention, there is provided an electric power assisted steering system comprising an electric motor and an electromagnetic clutch, characterised by a controller in accordance with the first aspect of the invention.

It is thus possible to reduce the susceptibility of an EPAS system to damage by large torques applied to the steering system. It is also possible to reduce the power consumption of an EPAS system, and reduce the likelihood of the EPAS system producing large unwanted assistance torques.

The present invention will now be described in more detail, with reference to the accompanying drawings, in which:

Figure 1 is a schematic diagram of an electronic clutch current controller according to an embodiment of the present invention; and

Figure 2 is a schematic diagram of the electronic clutch current controller according to another embodiment of the present invention.

Throughout the description, like reference numerals refer to like parts.

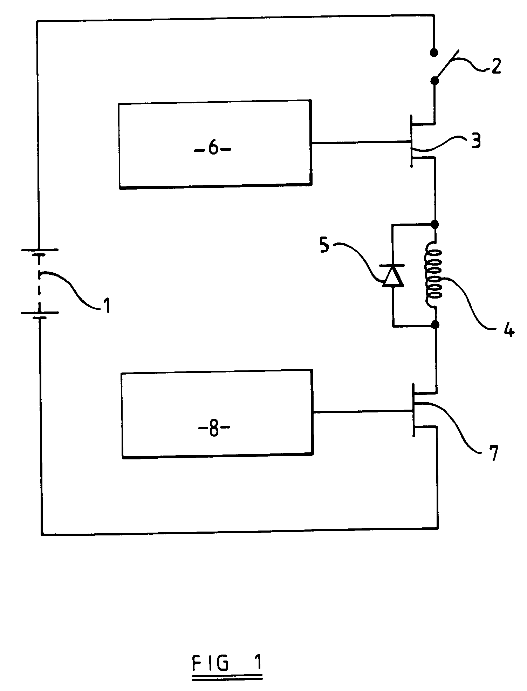

The clutch current controller of Figure 1 forms part of an Electronic Control Unit (ECU) of an EPAS system in a vehicle. The EPAS system typically comprises an electric motor having a motor shaft connected to the vehicle steering mechanism (not shown) via a gearbox and an electromagnetic clutch having a clutch winding 4. The electric motor is controlled so as to produce a torque to assist a driver to steer the vehicle or alternatively, in a drive-by-wire system, so as to steer the vehicle. The electromagnetic clutch may, for example, be a friction clutch or a magnetic particle type clutch.

The electromagnetic clutch is used for isolating the EPAS system from unwanted torque in the motor shaft. The maximum torque that an electromagnetic clutch can transmit with no slip between the input and output shafts is a function of the current passing through the clutch winding 4 and may be substantially proportional thereto. When the clutch slips, the transmitted torque will be less than or equal to the transmitted torque in the static, i.e. no slip, case.

The clutch current controller comprises a power supply 1, a relay contact 2 and a first power field effect transistor 3. The relay contact 2 is connected between the positive terminal of the power supply 1 and the drain of the first power transistor 3. The source of the first power transistor 3 is connected to a first terminal of the clutch winding 4 and the cathode of a flywheel diode 5. The gate of the first power transistor 3 is connected to a microcontroller unit (MCU) 6. A second terminal of the clutch winding 4 and the anode of the flywheel diode 5 are connected to the drain of a second power field effect transistor 7. The source of the second power transistor 7 is connected to the negative terminal of the power supply 1 and the gate of the second power transistor 7 is connected to an external hardware safety monitor controller 8.

The relay contact 2 serves to isolate the clutch and associated drive circuitry from the battery and may be driven from MCU 6 or safety controller 8.

The flywheel diode 5 is provided to protect the first and second power transistors 3, 7 from potentially damaging voltage transients, for instance caused by switching the current through the clutch winding 4, which is an inductive load.

The electromagnetic clutch is activated by means of the relay contact 2. The power supply 1 supplies power to the clutch winding 4 via the first power transistor 3. The MCU 6 supplies a drive signal to the first power transistor 3 for controlling the current passing through the clutch winding 4 by Pulse Width Modulation (PWM).

In order to control accurately the current supplied to the clutch winding 4 and compensate for variations in the potential difference across the power supply, a signal representative of the potential difference across the power supply is used with the following formula to calculate the duty cycle of the PWM drive signal:

$$duty = desired\ current \times circuit\ resistance/supply\ voltage$$

Alternatively, the current can be linearly modulated, i.e. the drive signal is progressively increased to increase the current flowing through the clutch winding 4.

During normal operation, the MCU 6 monitors the torque exerted by the electric motor and varies the current passing through the clutch winding 4. If the torque exerted by the electric motor decreases, the controller varies the duty cycle of the PWM in order to decrease the maximum amount of torque which the electromagnetic clutch can transmit, since the maximum amount of torque transmittable from the electric motor is reduced.

During normal operation, the safety controller 8 supplies a signal to the second power transistor 7 so that it maintains an ON state, thereby permitting current to pass through the clutch winding 4. If the safety controller 8 detects a fault in the EPAS system, it switches the second power transistor 7 to an OFF state in order to prevent current passing through the clutch winding 4. Consequently, the electromagnetic clutch 4 is switched off and so disengages the electric motor from the rest of the EPAS system.

Alternatively, the safety controller 8 and the MCU 6 may be transposed so that the MCU controls the second power transistor 7.

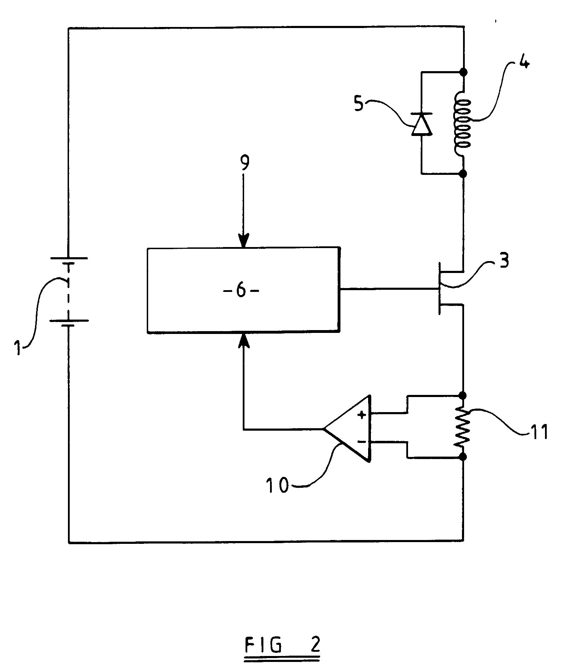

An alternative approach to controlling the current supplied to the clutch winding 4 is to measure the current in the circuit and provide closed loop control. Referring to Figure 2, the positive terminal of the power supply 1 is connected to the first terminal of the clutch winding 4 and the cathode of the flywheel diode 5. The second terminal of the clutch winding 4 and the anode of the flywheel diode 5 are connected to the drain of the first power transistor 3. The source of the first power transistor 3 is connected to a first terminal of a current sensing resistor 11 and the non-inverting input of a differential amplifier 10. The second terminal of the resistor 11 is connected to the negative terminal of the power supply 1 and the inverting input of the differential amplifier 10. The output terminal of the differential amplifier 10 is connected to a first input terminal of the MCU 6. A second input terminal of the MCU 6 is connected to a source 9 capable of supplying a signal indicative of the current demand of the clutch winding 4. An output terminal of the MCU 6 is connected to the gate of the first power transistor 3.

During normal operation, the current flowing through the clutch winding 4 is controlled by the first power transistor 3. The first power transistor 3 is driven by a PWM drive signal from the MCU 6. The duty cycle is determined on the basis of the current passing through the circuit and the current demand signal fed to the MCU 6. Since the potential difference across the sensor resistor 11 is a function of the current flowing through the circuit and is substantially proportional thereto, it is possible to determine the current passing through the clutch current controller.

The MCU 6 in both of the embodiments described hereinbefore receives input signals which allow it to control both the electric motor and the clutch of the EPAS system. These input signals represent the torque applied to a vehicle steering wheel by a driver and optionally other parameters such as vehicle speed and steering angle. The MCU 6 supplies drive signals to the motor for demanding a desired steering assistance torque. The MCU 6 also controls the current supplied to the coil 4 of the clutch so as to vary the maximum amount of torque which the clutch is capable of transmitting without slipping. The clutch current is varied in accordance with the following control strategies.

As the speed of the vehicle increases, the amount of assistance torque required from the electric motor is reduced. Therefore, the amount of current passing through the clutch winding 4 is decreased. This is advantageous, since the current consumption of the EPAS system is reduced. Further, by reducing the current passing through the clutch winding 4 at high vehicle speeds, the maximum torque which can be transmitted through the electromagnetic clutch is reduced. Thus, the clutch slips under lower torques, i.e. more readily, and so the risk of potential damage to the EPAS system, due to torque impulses from the road wheels, is reduced.

The MCU 6 also varies the clutch current through the winding 4 in accordance with the torque provided by the motor. Although the motor torque may be measured, the current supplied to the motor provides a convenient measure of torque produced by the motor so that the motor demand signal provided by the MCU 6 may also be used to control the current flowing through the winding 4 of the clutch. The clutch current is controlled in such a way that the clutch is always capable of transmitting the torque provided by the motor without slipping. For instance, the clutch current may be controlled so that the maximum torque which the clutch can transmit without slipping is greater than the motor torque by a fixed amount or proportion. Thus, the clutch power consumption is reduced while ensuring correct operation of the EPAS system. The clutch current is controlled to a level such that there is a sufficient margin to prevent the clutch from disengaging during normal operation of the EPAS system. Frequent disengagement of the clutch may cause acoustic noise to be produced. Further, a sufficient margin of torque transmission without slipping is desirable so as to allow the EPAS system to respond to sudden assistance torque demands. Otherwise, the clutch current control might not be able to respond quickly enough to such sudden demands to allow it to track the motor current.

In order to implement both of these control strategies, the MCU 6 calculates the two clutch currents which the individual strategies require. The higher of the currents is then used for control of the clutch.

## Claims

1. A clutch current controller for an electric power assisted steering system having an electric motor and an electromagnetic clutch (4), characterised in that the controller (3, 6) is arranged to supply a current to the clutch (4) as a function of the output of the electric motor.

2. A controller as claimed in Claim 1, characterised in that the controller (3, 6) is arranged to control the clutch current such that the maximum torque which the clutch (4) is capable of transmitting without slipping is greater by a predetermined amount or proportion than the assistance torque applied to the clutch.

3. A controller as claimed in Claim 1 or 2, characterised in that the controller (3, 6) is arranged to control the clutch current such that the maximum torque which the clutch (4) is capable of transmitting without slipping is substantially proportional to the current through the electric motor.

4. A controller as claimed in any one of the preceding claims, characterised in that the controller (3, 6) is arranged to control the clutch current as a function of vehicle speed.

5. A controller as claimed in Claim 4, characterised in that the controller (3, 6) is arranged to reduce the clutch current as the vehicle speed increases.

6. A controller as claimed in any one of the preceding claims, characterised by means (10, 11) for providing closed-loop control of the clutch current.

7. A controller as claimed in any one of the preceding claims, characterised by means (7, 8) for discontinuing the supply of clutch current in response to a fault signal.

8. A controller as claimed in any one of the preceding claims, characterised in that the controller (3, 6) is arranged to control the clutch current by pulse width modulation.

9. An electric power assisted steering system comprising an electric motor and an electromagnetic clutch (4), characterised by a controller as claimed in any one of the preceding claims.

FIG 1

FIG 2